# EUROPEAN PATENT SPECIFICATION

(11) **EP 4 330 587 B1**
(45) Date of publication and mention of the grant of the patent: **19.02.2025**
(21) Application number: 22734033.8
(22) Date of filing: 22.04.2022
(51) Int. Cl.: F16L 53/38, H05B 1/02, H05B 3/40

(54) **REMEDIATION OF ELECTRICALLY HEATED CONDUITS**
SANIERUNG ELEKTRISCH BEHEIZTER LEITUNGEN
CORRECTION DE CONDUITS CHAUFFÉS ÉLECTRIQUEMENT

(30) Priority: 29.04.2021 GB 202106176
(43) Date of publication of application: 06.03.2024
(73) Proprietor: Acergy France SAS, 92150 Suresnes (FR)
(72) Inventor: GORGOGLIONE, Davide, 78220 Viroflay (FR); MANACH, Julien, Aberdeen Aberdeenshire AB13 0DS (GB)
(74) Representative: Keltie LLP
(86) International application number: PCT/IB2022/000230
(87) International publication number: WO 2022/229700

(56) References cited:
- FR-A1- 2 978 006
- FR-A1- 2 991 024
- US-A1- 2013 014 833
- US-A1- 2019 128 461

## Description

This invention relates to conduits that are heated electrically for flow assurance. More specifically, the invention relates to simplifying redundancy and remediation and improving fault resistance in conduits that are fitted with multiphasic electrical heating systems, such as pipelines used in the subsea oil and gas industry.

Subsea pipelines are used as 'tie-backs' to transport crude oil and/or natural gas from a subsea wellhead across the seabed on the way to the surface. Typically, in offshore locations, the oil or gas flows up a riser from the seabed to the surface to undergo treatment and temporary storage at a surface installation.

On production of oil or gas, the produced fluid emerges from a subsea wellhead at elevated temperature and pressure and enters a pipeline in a multi-phase state. During subsequent transportation along the pipeline, the temperature and pressure of the produced fluid have to be kept high enough to ensure an uninterrupted flow, at a sufficient flow rate, across the seabed and up the riser. Thus, various measures are taken to ensure that the internal temperature of the pipeline remains high despite thermal exchange with the surrounding seawater, which is invariably much colder.

Designers of subsea pipelines have adopted both passive and active approaches to thermal management, either individually or in combination. In passive thermal management systems, the pipeline is thermally insulated to retain heat in the produced fluid. For example, a pipe-in-pipe (PiP) assembly comprises an inner flowline pipe and an outer pipe in coaxial relation to define an annulus between them, which may be filled with gas and thermally insulating materials. Conversely, active thermal management systems add heat to the pipeline, for example by electrical heating.

One example of electrical heating is a trace heating system comprising resistive electrical wires or cables running along, and in thermal contact with, the outer surface of a steel flowline pipe. Heat produced by passing an electric current along the cables is conducted firstly from the cables to the pipe wall and secondly through the pipe wall to the produced fluid flowing within the flowline.

Conventionally, PiP structures are used for subsea pipelines that employ trace heating. In that case, the heating cables are disposed within the annulus against the outer surface of the flowline pipe, buried beneath a surrounding layer of thermal insulation material in the annulus. The cables extend along the pipeline parallel to each other, being arranged in straight lines parallel to the central longitudinal axis of the pipeline or, more commonly, spiralling helically around that axis.

Heating cables can be powered by direct current (DC) or alternating current (AC), which can be monophasic current or multiphasic current, typically triphasic current. However, monophasic AC power is less efficient than triphasic AC power and cannot allow effective heating along as great a distance as triphasic AC power. Triphasic AC power is therefore preferred, especially as there is a trend toward longer tie-backs as oil and gas reserves are being exploited in increasingly challenging locations.

In triphasic trace-heated pipeline systems, heating cables are grouped, at least functionally, in triplets being groups of three cables, one cable for each phase. Each group or triplet forms a three-phase star connection circuit. Specifically, a three-phase electrical supply supplies respective phases of alternating current to one end of each of the three cables. At the other end, the three cables are connected together in short-circuit by a wye connection to form a star connection or 'star end'.

Beneficially, where the three heating cables meet at the star end, a neutral point is defined where the sum of the three current phases is nil. This means that no return cable is required.

A star end is exemplified in FR 2978006 and correspondingly US 2013/014833, which discloses a trace-heated pipeline fitted with a triphasic heating system and having redundant heating cables. FR 2991024 teaches the addition of intermediate star connections, rather than having star ends at the end of a pipeline. WO 2020/188362, to the Applicant, discloses relocating the star end to improve its performance. US 2019/128461 discloses a trace heated pipeline with a multiphasic heating system having at least one redundant heating cable.

Typically, there are at least two to four three-phase circuits in a trace heating system, including the option of one spare circuit. In this respect, a trace heating system must operate reliably throughout the long service life of a pipeline, especially as any failure to heat the pipeline, whenever required, could result in a blockage that is difficult or impossible to resolve. As cables of the system are rendered inaccessible by the outer pipe of a PiP assembly, they cannot be maintained or replaced in service.

Tie-backs and therefore heating cables of trace heating systems can have a length in the order of tens of kilometres. To suit fabrication of the pipeline, sections of the cables may be connected in series, thus requiring numerous connections at the junctions between them that each create a potential failure point.

The significant risks and severe consequences of failure of a trace heating system require a high level of redundancy to guarantee availability of the system, for example the provision of two or three independent systems. However, multiplying the number of systems to increase redundancy substantially increases cost and complexity. There is also a problem of lack of space within the annulus of a PiP system, where there is a need to accommodate multiple cables in addition to thermal insulation material within a restricted volume.

Whilst redundancy is relatively easy, if costly, to add to a monophasic trace-heating system, the problems of cost, complexity and lack of space are greatly compounded by the architecture of a conventional triphasic system. As at least three working cables are required for each circuit of a triphasic system to function, failure of any one cable of a triplet group renders all cables of that group inoperative and unavailable for use. Thus, redundancy requires additional cables to be installed in multiples of three.

The present invention takes a different approach to increase redundancy in a multiphasic trace heating system but without necessarily adding heating cables. This approach is to enable the star end architecture to be reconfigured easily so as to modify the role and phase of heating cables in response to faults.

In this respect, the invention aims for broadly the same objective as that outlined at page 6 of the paper OTC-29462-MS *'*Innovative Field Development Scheme Based on Saipem's ETH PiP and Relevant Subsea Power Feeding System', presented at the Offshore Technology Conference in Houston, Texas in May 2019. That paper discusses a subsea star end coupling system that offers the possibility to recombine heating cables subsea as desired to reinstate operative triplets. For this purpose, each cable terminating at the star end has an individual plug that is co-operable with a subsea switchboard. The plug can be repositioned on the switchboard to enable the cable to be connected to another cable when required to remedy or circumvent a fault.

Inconveniently, reconfiguration must be managed underwater, plug-by-plug and cable-by-cable, using an ROV. This process is slow, intricate, prone to error and vulnerable to any difficulty in removing or inserting any of the plugs. Prolonged ROV operations are also susceptible to interruption caused by adverse weather at the surface.

It is against this background that the present invention has been devised. In one sense, the invention resides in a remedial star connection system for an electrically heated subsea conduit, the system comprising: first and second terminals; first and second connectors that are each complementary to a respective one of the terminals, the first connector comprising at least two contacts arranged to connect with at least two contacts of the first terminal and the second connector comprising at least one contact arranged to connect with at least one contact of the second terminal; and a coupling between the first and second connectors wherein the terminals are exposed to be accessible by the respective connectors underwater to effect short-circuit connection via the coupling between the at least two contacts of the first connector and the at least one contact of the second connector.

The system can be configured in various ways. One way is to modify connections within the first and/or second connectors, for example where the contacts of at least one of said connectors are movable or removable to serve as modifiable connections.

The system may further comprise a junction box to which the first and second connectors are coupled. In that case, the system may be configurable by modifying connections within the junction box, for example movable or removable conductors of the junction box. It is also possible to configure the system by modifying connections within the coupling.

The coupling preferably comprises at least one flexible flying lead. For subsea use, the first and second connectors may be wet-mateable and may comprise ROV handles.

The inventive concept also embraces an electrically heated conduit, comprising: at least one group of heating cables that are powered to carry respective phases of multiphasic AC current and are connected to a first external terminal; at least one additional heating cable that is powered to carry a phase of AC current and is connected to a second external terminal; and a remedial star connection system of the invention, the first connector of the system being engageable with the first terminal to connect with, and to effect short-circuit connection between, at least two of the cables of the group, and the second connector of the system being engageable with the second terminal to connect with the additional cable and, via the coupling to the first connector, to effect short-circuit connection between the additional cable and the short-circuited cables of the group.

The additional cable may be one of a second group of heating cables that are powered to carry respective phases of multiphasic AC current and are connected to the second external terminal.

The inventive concept further embraces a subsea installation comprising at least one conduit of the invention.

The inventive concept extends to a corresponding method of remediating a fault in a heating cable, being one of a group of heating cables powered by respective phases of multiphasic AC current to define a heating circuit of an electrically heated subsea conduit. The method comprises disconnecting a star connection from the conduit, that connection previously joining the cables of the group in short circuit. Then, a remedial star connection is connected instead to the conduit by: connecting a first connector of the remedial star connection to at least two contacts of a first terminal, those contacts being connected to respective intact cables of the group to join those intact cables in short circuit, the cables of the group all being connected to the respective contacts of the first terminal; and connecting a second connector of the remedial star connection, coupled to the first connector, to a second terminal having at least one contact connected to a respective additional intact heating cable of the conduit powered by a phase of AC current, thus bringing that additional cable into short circuit connection with the intact cables of the group to form a new heating circuit.

Conveniently, the first and second connectors may be connected to respective terminals positioned externally to the conduit in such a location as to be accessible by an ROV or a diver when the conduit is installed underwater, those terminals being connected respectively to the group of heating cables and to the additional heating cable.

The additional cable may be selected from among a second group of heating cables that are powered to carry respective phases of multiphasic AC current.

Preliminarily, the method may comprise identifying the heating cable of the first group that has the fault and then configuring the remedial star connection to isolate the heating cable that has the fault. The remedial star connection may also be configured to connect to the additional cable chosen to be brought into short circuit connection with the intact cables of the first group.

When performed on a conduit underwater, the method of the invention may advantageously comprise configuring the remedial star connection before lowering the configured remedial star connection into the water.

Configurable connectors of the invention can also be used in a related method of remediating a fault in a heating cable, being one of a group of heating cables powered by respective phases of multiphasic AC current to define a heating circuit of an electrically heated subsea conduit. That method comprises: identifying the faulty cable; configuring a remedial connection to connect to the faulty cable by configuring contacts of connectors of the remedial connection, for example before lowering the configured remedial connection into water; engaging a first connector of the configured remedial connection with a first terminal of the conduit that is accessible underwater at a longitudinal position on one side of the fault, the cables of the group all being connected to respective contacts of the first terminal; engaging a second connector of the configured remedial connection with a second terminal of the conduit that is accessible underwater at another longitudinal position on an opposite side of the fault, the cables of the group all also being connected to respective contacts of the second terminal; and reinstating the heating circuit by conveying a phase of the AC current along the faulty cable and along a bypass coupling between the first and second connectors, without also conveying at least one other phase of the AC current along the bypass coupling.

In summary, the invention contemplates an externalised star-end termination providing a reconfigurable star-end for a trace heated pipeline, where the pipeline comprises at least three heating cables powered by at least two different phases. For use in a subsea context, the star-end comprises a wet-mate connector to connect cables electrically with corresponding trace heating cables of the pipeline with connections or terminals that are exposed for access by an ROV or a diver. An electrical connection puts at least two cables in short circuit with each other and/or puts at least one other cable directly or indirectly in short circuit with the cables of another similar reconfigurable star-end. An electrical connection can also be made between two or more different trace-heated pipes.

Thus, the invention is concerned with a trace heated pipeline comprising triplets of cables, wherein each triplet comprises distinct cables powered by at least two different phases and is terminated by a connection to a reconfigurable star-end.

Embodiments of the invention provide a reconfigurable star-end connector for a trace heated pipeline comprising at least one triplet of three cables powered by at least two different phases. The reconfigurable star-end connector comprises: a connector to electrically connect internal cables with the corresponding triplet of trace-heating cables of the pipeline; and an electrical connection putting in short circuit together, directly or indirectly, at least one internal cable carrying a first phase with the internal cables carrying another phase of another similar reconfigurable star-end connector.

Where the trace heated pipeline is a subsea pipeline, the connector is suitably a wet-mate connector. Where the pipeline is a PiP structure, the trace-heating cables are suitably inside the annulus with terminals connected to the cables exposed accessibly at a location external to the pipeline, for example on an external surface of an outer pipe of the structure.

The reconfigurable star-end connector may comprise at least one additional plug or connector for directly or indirectly connecting two or more similar star ends together. Thus, embodiments of the invention also provide an assembly comprising at least two reconfigurable star end connectors of the invention, electrically connected together by an electrical connection comprising at least one interconnecting cable. Two interconnected star end connectors may, for example, be mounted on the same pipeline to connect two distinct heating triplets.

Embodiments of the invention also implement a method to mitigate the loss of at least one heating cable of a first cable triplet terminated by a star-end connector, which connector comprises an electrical connector and a star-end connection inside the connector. The method comprises: unplugging the star-end connector terminating the first triplet, and the star-end connector terminating a second triplet; and plugging in, as a replacement, reconfigurable or reconfigured star-end connectors that are electrically connected together directly or indirectly, wherein the internal cable corresponding to the faulty cable of the first triplet is disconnected, and the internal cable corresponding to the same phase of the second triplet is put in short circuit with the other cables of the first triplet carrying at least one another phase via the star-end connectors.

Thus, the invention provides a remedial star connection system for an electrically heated conduit. A group of heating cables powered with respective phases of multiphasic AC current are connected to a first external terminal, and at least one additional heating cable powered with a phase of AC current is connected to a second external terminal.

A first connector has at least two contacts arranged to connect with opposed contacts of the first terminal and a second connector has at least one contact arranged to connect with an opposed contact of the second terminal. The connectors are coupled together so that when they are engaged with the terminals, short-circuit connection is effected between the additional cable and at least two intact cables of the group to reinstate a working heating circuit.

The system can be pre-configured to remediate faults in different cables of a group. The connectors may be wet-mateable for use on subsea conduits.

In order that the invention may be more readily understood, reference will now be made, by way of example, to the accompanying drawings in which:
Figure 1 is a schematic side view in longitudinal section of a trace heated subsea pipeline of PiP configuration;
Figure 2 corresponds to Figure 1 but shows an arrangement of the invention to compensate for a fault in one of the heating cables of the trace-heating system;
Figure 3 is a flow diagram illustrating a method of the invention;
Figure 4 corresponds to Figure 2 but shows another arrangement of the invention for compensating for a similar fault;
Figure 5 is a schematic side view in longitudinal section of an arrangement of the invention connecting the heating cables of successive trace heated subsea pipelines; and
Figure 6 is a schematic side view in longitudinal section of an arrangement of the invention being used to bridge a fault in a heating cable between successive sections of a trace heated subsea pipeline.

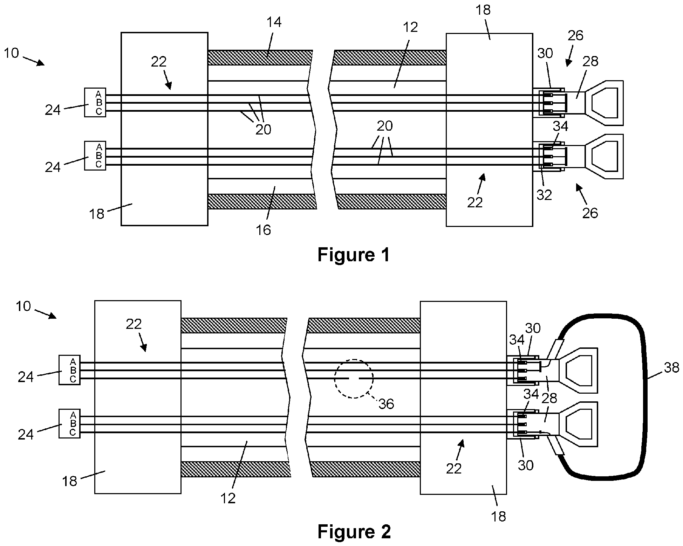

Referring firstly to Figures 1 and 2, a trace heated subsea pipeline 10 of PiP configuration comprises an inner pipe 12 and an outer pipe 14 in coaxial relation defining a thermally-insulating annulus 16 between them. Ends of the pipeline 10 are closed by conventional terminal modules 18 serving as bulkheads that seal the annulus 16.

Heating cables 20 extend through the terminal modules 18 and along the annulus 16 in contact with the external surface of the inner pipe 12. Thermal insulation material that is conventionally also disposed in the annulus 16 around the heating cables 20 is omitted from the drawings for clarity.

For simplicity, the heating cables 20 are shown here as extending longitudinally along the inner pipe 12, parallel to each other and to the central longitudinal axis of the assembly. In practice, the heating cables 20 could wind helically around, or extend sinuously along, the inner pipe 12 instead.

In this triphasic system, the heating cables 20 are grouped in triplets 22. For simplicity, just two triplets 22 are shown here. Both triplets 22 can be operational simultaneously or the cables 20 of one triplet 22 can provide back-up redundancy for cables 20 of the other triplet 22, only to be activated when required.

The heating cables 20 of each triplet 22 extend from respective three-phase power supplies 24 on the terminal module 18 at one end of the pipeline 10 to respective star ends 26 that are exposed accessibly on the terminal module 18 at the other end of the pipeline 10. A wye connection between the cables 20 is effected at each star end 26.

Each cable 20 of each triplet 22 is powered by a different respective phase of alternating current (AC), those phases being designated here as A, B and C.

The grouping of the cables 20 in each triplet 22 is illustrated here by the proximity of those cables 20 to each other, which indeed will usually be the case in practice. However, the main significance of grouping is not the positional relationship between cables 20 of a triplet 22 but the functional relationship between those cables 20. Specifically, each triplet 22 must comprise three cables 20 brought together at a neutral point, respectively powered by phases A, B and C, regardless of whether those cables 20 are positioned beside each other or otherwise.

Even if one or more of the cables 20 is remote from other cables 20 of the same heating circuit, the high thermal conductivity of the inner pipe 12, which is typically of steel, helps to avoid significant cold spots within the pipeline 10. The commonly helical or sinuous arrangement of the cables 20 also helps to minimise cold spots.

In this example, the star ends 26 are defined by removable wet-mateable connectors 28, exemplified here by plugs that are engageable with respective sockets 30 that serve as terminals for the triplets 22. The sockets serving as terminals for the triplets 22 are positioned to be accessible to an ROV or diver when the pipeline 10 is underwater. The sockets 30 may, for example, be fixed to an outer surface of the associated terminal module 18 as shown. It will be appreciated that the arrangement could be reversed, with fixed plugs serving as terminals instead being co-operable with complementary sockets 30 on the removable connectors 28.

Each socket 30 is dedicated to a respective triplet 22 and contains pins 32 that are connected to the respective heating cables 20 of that triplet 22. Correspondingly, each connector 28 comprises contacts 34 that receive the respective pins 32 when the connector 28 is inserted into a complementary socket 30.

In Figure 1, the connectors 28 are configured for normal operation. In particular, the contacts 34 within each connector 28 are all connected to each other to define the neutral point required to create a star end 26 for each triplet 22 of heating cables 20. The connectors 28 can be left in place in their respective sockets 30 for as long as the cables 20 of the trace heating system remain intact and the system therefore remains fully operational.

An example of a fault 36 is a break in the heating cable 20 powered by AC phase C in the first triplet 22 as shown in Figure 2. Such a failure of any one cable 20 would cause the entire heating circuit defined by that triplet 22 to fail. Conventionally, that entire triplet 22 and all of its cables 20 would be taken out of service and a spare triplet 22, if available, would have to be activated in its entirety instead.

Elegantly, the invention allows the star ends 26 to be reconfigured simply by changing the connectors 28 in response to failure of a heating cable 20. In accordance with the invention, reconfiguration is achieved simply by removing and replacing the connectors 28 of Figure 1 with differently-configured connectors 28, as shown in Figure 2, that are arranged to create triplets 22 from different combinations of available heating cables 20.

It will be noted that the replacement connectors 28 of Figure 2 are coupled to each other, for example by a flexible flying lead 38. This coupling between the replacement connectors 28 allows intact cables 20 of a triplet 22 to be connected to another intact cable 20, for example a cable 20 of another triplet 22, via another socket 30 to create a new functioning three-phase heating circuit. The replacement connectors 28 and a coupling exemplified by the flying lead 38 together form a remedial star connection system of the invention.

As a result, a single, simple connector replacement operation performed quickly for each triplet 22 effects multiple connections of heating cables 20 in a desired configuration to circumvent a fault 36. Removal and replacement is conveniently performed by an ROV, for which purpose the connectors 28 may have ROV handle formations as shown.

The configuration of the replacement connectors 28 of Figure 2 is tailored to the nature of the fault 36. In particular, the contacts 34 within one connector 28 that correspond to the remaining intact heating cables 20 of the first triplet 22, namely those powered by AC phases A and B in this example, are connected together. Those contacts 34 are connected via the flying lead 38 to the contact 34 within the other connector 28 that corresponds to one of the cables 20 of the second triplet 22, in this case the cable 20 powered by AC phase C.

Thus, when the replacement connectors 28 have been installed in the sockets 30, the heating cables 20 of the first triplet 22 powered by AC phases A and B are connected to each other and, via the flying lead 38, to the cable 20 of the second triplet 22 powered by AC phase C. These connections form a star end 26 between those three cables 20 to create a new functioning three-phase heating circuit. Optionally, the contact 34 corresponding to the faulty cable 20 can be connected to earth.

Beneficially, therefore, two of the three heating cables 20 of the first triplet 22 remain operational as part of the new circuit, and only one additional cable 20 rather than an entire further triplet 22 is required to provide redundancy.

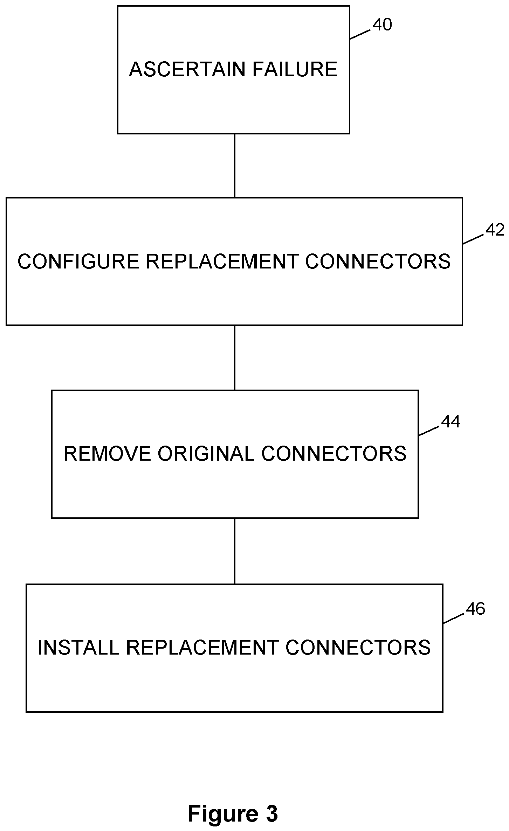

Thus, with reference to Figure 3, a fault is remedied by the following steps. Firstly, at 40, the nature of the fault is ascertained, for example using conventional fibre-optic monitoring cables 20 extending along the pipeline 10. Secondly, at 42, when the faulty heating cable 20 of a triplet 22 has been identified, replacement connectors 28 are configured, topside, to connect the surviving cables 20 of that triplet 22 to each other and to another intact cable 20. In this respect, integrated star-end wiring inside the connectors 28 is tailored to the fault but a standard harness may be used in the flying lead 38 that joins the paired connectors 28. Thirdly, at 44, the original connectors 28 are removed from their sockets 30. Fourthly, at 46, the replacement connectors 28 are lowered to the seabed and wet-mated with the sockets 30 to make the star end connections that are required to reconstitute a working triplet 22 from the chosen cables 20.

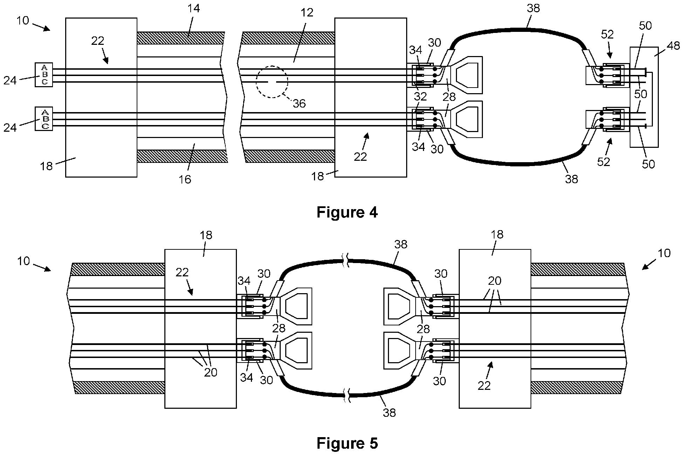

Moving on now to Figure 4, this drawing shows a similar pipeline 10 with a similar fault 36, namely a break in the heating cable 20 powered by AC phase C in the first triplet 22. In this case, the replacement connectors 28 are both of a standard configuration, each comprising separate contacts 34 that receive the respective pins 32 of the complementary socket 30. Each of those connectors 28 has a flying lead 38 containing conductors that are connected respectively to each contact 34.

In this case, a remedial star connection system of the invention further comprises a junction box 48. The conductors in the flying leads 38 connect in turn to respective contacts 50 in a junction box 48, in this example via a further plug-and-socket combination 52. This arrangement allows standard connectors 28 and a standard harness within the flying leads 38 to be coupled to a bespoke, tailored junction box 48.

In this embodiment, therefore, it is the configuration of the junction box 48 that is tailored to the nature of the fault 36, not the configuration of the connectors 28. In particular, the contacts 50 of the junction box 48 that correspond to the remaining intact heating cables 20 of the first triplet 22, namely those powered by AC phases A and B in this example, are connected together. Those contacts 50 are connected within the junction box 48 to the contact 50 of the junction box 48 that corresponds to one of the cables 20 of the second triplet 22, in this case the cable 20 powered by AC phase C.

Thus, again, when the replacement connectors 28 have been installed in the sockets 30, the flying leads 38 and the appropriately configured junction box 48 connect the heating cables 20 of the first triplet 22 powered by AC phases A and B to each other and to the cable 20 of the second triplet 22 powered by AC phase C. The junction box 48 is configured at a topside location and the configured junction box 48 is then lowered to the pipeline 10, conveniently with the connectors 28 already connected to the junction box 48 via the flying leads 38 and the plug-and-socket combinations 52.

Figure 5 shows how connectors 28 of the invention can also be used to energise another trace-heated pipeline 10 if those connectors 28 are configured with all three contacts 34 enabled. Here, connectors 28 coupled to respective sockets 30 of a first pipeline 10 convey three-phase AC current via flying leads 38 to corresponding connectors 28 engaged with respective sockets 30 of a second pipeline 10. The sockets 30 terminate respective triplets 22 of heating cables 20 in each pipeline 10.

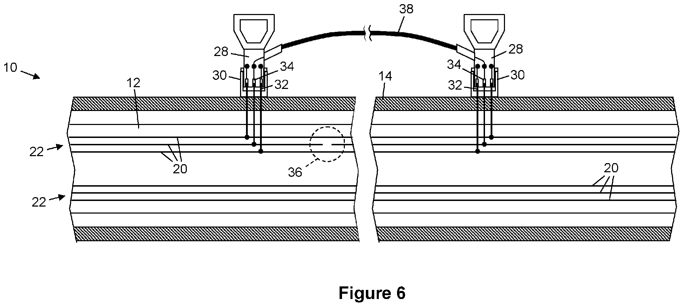

Finally, Figure 6 shows how connectors 28 of the invention can be used to bypass a fault 36 between sections of a heating cable 20. Here, longitudinally-spaced sockets 30 exposed accessibly to an ROV or diver underwater on the outer pipe 14 of a PiP pipeline 10 have pins 32 that connect to the respective heating cables 20 of a triplet 22 within the annulus 16. If one of those cables 20 develops a fault 36 at a location between the connections to the sockets 30, for example due to a failed junction between successive sections of a cable 20, connectors 28 at respective ends of a flying lead 38 can be configured with contacts 34 to connect to the faulty cable 20 via the appropriate pins 32. When the connectors 28 are inserted into the sockets 30, the phase of current carried by the faulty cable 20 can thereby bypass the fault 36 via the flying lead 38 between the connectors 28 serving as a bypass coupling to maintain the integrity of that triplet 22.

Many other variations are possible within the inventive concept. For example, in the arrangements shown in Figures 5 and 6, a configurable junction box can be interposed between standard connectors in the manner shown in Figure 4. Similarly, flying leads can connect the connectors to the junction box.

At least one connector may comprise the ends of multiple triplets, with either distinct star ends or connected together to a unique star end, without departing from the invention as defined in the appended claims.

Whilst flexible flying leads are preferred to allow freedom of positioning of connectors, it would be possible, in principle, to join connectors by a rigid bridge instead. A configurable junction box could be incorporated into such a bridge.

## Claims

1. A remedial star connection system for an electrically heated subsea conduit (10), the system comprising:
first and second terminals (30);
first and second connectors (28) that are each complementary to a respective one of the terminals (30), the first connector (28) comprising at least two contacts (34) arranged to connect with at least two contacts (32) of the first terminal (30) and the second connector (28) comprising at least one contact (34) arranged to connect with at least one contact (32) of the second terminal (30); and
a coupling (38) between the first and second connectors (28);
**characterised in that** the terminals (30) are exposed to be accessible by the respective connectors (28) underwater to effect short-circuit connection via the coupling (38) between the at least two contacts (34) of the first connector (28) and the at least one contact (34) of the second connector (28).

2. The system of Claim 1, being configurable by modifying connections within the first and/or second connectors (28).

3. The system of Claim 2, wherein said contacts (34) of at least one of said connectors (28) are movable or removable to serve as modifiable connections.

4. The system of any preceding claim, further comprising a junction box (48) to which the first and second connectors (28) are coupled.

5. The system of Claim 4, being configurable by modifying connections within the junction box (48).

6. The system of Claim 5, wherein the modifiable connections comprise movable or removable conductors (38) of the junction box (48).

7. The system of any preceding claim, being configurable by modifying connections within the coupling (38).

8. The system of any preceding claim, wherein the first and second connectors (28) are wet-mateable.

9. An electrically heated conduit (10), comprising:
at least one group of heating cables (22) that are powered to carry respective phases of multiphasic AC current and are connected to a first external terminal (30);
at least one additional heating cable (20) that is powered to carry a phase of AC current and is connected to a second external terminal (30); and
a remedial star connection system of any preceding claim, the first connector (28) of the system being engageable with the first terminal (30) to connect with, and to effect short-circuit connection between, at least two of the cables (20) of the group (22), and the second connector (28) of the system being engageable with the second terminal (30) to connect with the additional cable (20) and, via the coupling (38) to the first connector (28), to effect short-circuit connection between the additional cable (20) and the short-circuited cables of the group (22).

10. The conduit of Claim 9, wherein the additional cable (20) is one of a second group of heating cables (22) that are powered to carry respective phases of multiphasic AC current and are connected to the second external terminal (30).

11. A subsea installation comprising at least one conduit (10) of Claim 9 or Claim 10.

12. A method of remediating a fault (36) in a heating cable (20), being one of a group of heating cables (22) powered by respective phases of multiphasic AC current to define a heating circuit of an electrically heated subsea conduit (10), the method comprising:
disconnecting a star connection from the conduit (10), that connection joining the cables of the group (22) in short circuit; and
connecting a remedial star connection to the conduit (10) by:
connecting a first connector (28) of the remedial star connection to at least two contacts (32) of a first terminal (30), those contacts (34) being connected to respective intact cables (20) of the group (22) to join those intact cables (20) in short circuit, the cables (20) of the group (22) all being connected to respective contacts (32) of the first terminal (30); and
connecting a second connector (28) of the remedial star connection, coupled to the first connector (28), to a second terminal (30) having at least one contact (32) connected to a respective additional intact heating cable (20) of the conduit (10) powered by a phase of AC current, thus bringing that additional cable (20) into short circuit connection with the intact cables (20) of the group (22) to form a new heating circuit.

13. The method of Claim 12, comprising connecting the first and second connectors (28) to respective terminals (30) positioned externally to the conduit (10), those terminals (30) being connected respectively to the group of heating cables (22) and to the additional heating cable (20).

14. The method of Claim 12 or Claim 13, comprising selecting the additional cable (20) from among a second group of heating cables (22) that are powered to carry respective phases of multiphasic AC current.

15. The method of any of Claims 12 to 14, further comprising, preliminarily:
identifying the heating cable (20) that has the fault (36); and
configuring the remedial star connection to isolate the heating cable (20) that has the fault (36).

16. The method of Claim 15, further comprising configuring the remedial star connection to connect to the additional cable (20) chosen to be brought into short circuit connection with the intact cables (20) of the first group (22).

17. The method of Claim 15 or Claim 16 when performed on a conduit (10) under water, the method comprising configuring the remedial star connection before lowering the configured remedial star connection into the water.

18. The method of any of Claims 15 to 17, comprising configuring the remedial star connection by modifying connections within the first and/or second connectors (28).

19. The method of Claim 18, comprising moving or removing contacts (34) of at least one of said connectors (28).

20. The method of any of Claims 15 to 19, comprising configuring the remedial star connection by modifying connections within a junction box (48) to which the first and second connectors (28) are coupled.

21. The method of any of Claims 15 to 20, comprising configuring the remedial star connection by modifying connections within a coupling (38) between the connectors (28).

22. A method of remediating a fault (36) in a heating cable (20), being one of a group of heating cables (22) powered by respective phases of multiphasic AC current to define a heating circuit of an electrically heated subsea conduit (10), the method comprising:
identifying the faulty cable (20);
configuring a remedial connection to connect to the faulty cable (20) by configuring contacts (34) of connectors (28) of the remedial connection;
engaging a first connector (28) of the configured remedial connection with a first terminal (30) of the conduit (10) that is accessible underwater at a longitudinal position on one side of the fault (36), the cables (20) of the group (22) all being connected to respective contacts (32) of the first terminal (30);
engaging a second connector (28) of the configured remedial connection with a second terminal (30) of the conduit (10) that is accessible underwater at another longitudinal position on an opposite side of the fault (36), the cables (20) of the group (22) all also being connected to respective contacts (32) of the second terminal (30); and
reinstating the heating circuit by conveying a phase of the AC current along the faulty cable (20) and along a bypass coupling (38) between the first and second connectors (28), without also conveying at least one other phase of the AC current along the bypass coupling (38).

## Patentansprüche

1. Abhilfesternschaltungssystem für eine elektrisch beheizte Unterwasserleitung (10), wobei das System Folgendes umfasst:
einen ersten und zweiten Anschluss (30);
einen ersten und zweiten Verbinder (28), die jeweils komplementär zu einem jeweiligen der Anschlüsse (30) sind, wobei der erste Verbinder (28) mindestens zwei Kontakte (34) umfasst, die zum Verbinden mit mindestens zwei Kontakten (32) des ersten Anschlusses (30) ausgelegt sind, und der zweite Verbinder (28) mindestens einen Kontakt (34) umfasst, der zum Verbinden mit mindestens einem Kontakt (32) des zweiten Anschlusses (30) ausgelegt ist, und
eine Kupplung (38) zwischen dem ersten und zweiten Verbinder (28);
**dadurch gekennzeichnet, dass** die Anschlüsse (30) exponiert sind, so dass sie für die jeweiligen Verbinder (28) unter Wasser zugänglich sind, um eine Kurzschlussverbindung über die Kupplung (38) zwischen den mindestens zwei Kontakten (34) des ersten Verbinders (28) und dem mindestens einen Kontakt (34) des zweiten Verbinders (28) herzustellen.

2. System nach Anspruch 1, das durch Modifizieren von Verbindungen innerhalb des ersten und/oder zweiten Verbinders (28) konfigurierbar ist.

3. System nach Anspruch 2, wobei die genannten Kontakte (34) von mindestens einem der genannten Verbinder (28) beweglich oder entfernbar sind, um als modifizierbare Verbindungen zu dienen.

4. System nach einem vorherigen Anspruch, das ferner eine Anschlussdose (48) umfasst, mit der der erste und zweite Verbinder (28) gekoppelt sind.

5. System nach Anspruch 4, das durch Modifizieren von Verbindungen innerhalb der Anschlussdose (48) konfigurierbar ist.

6. System nach Anspruch 5, wobei die modifizierbaren Verbindungen bewegliche oder entfernbare Leiter (38) der Anschlussdose (48) umfassen.

7. System nach einem vorherigen Anspruch, das durch Modifizieren von Verbindungen innerhalb der Kupplung (38) konfigurierbar ist.

8. System nach einem vorherigen Anspruch, wobei der erste und zweite Verbinder (28) nass steckbar sind.

9. Elektrisch beheizte Leitung (10), die Folgendes umfasst:
mindestens eine Gruppe von Heizkabeln (22), die mit Strom versorgt werden, um jeweilige Phasen eines mehrphasigen Wechselstroms zu führen, und die mit einem ersten externen Anschluss (30) verbunden sind,
mindestens ein zusätzliches Heizkabel (20), das mit Strom versorgt wird, um eine Phase eines Wechselstroms zu führen, und mit einem zweiten externen Anschluss (30) verbunden ist, und
ein Abhilfesternschaltungssystem nach einem vorherigen Anspruch, wobei der erste Verbinder (28) des Systems mit dem ersten Anschluss (30) in Eingriff gebracht werden kann, um eine Verbindung mit mindestens zwei der Kabel (20) der Gruppe (22) herzustellen und eine Kurzschlussverbindung dazwischen zu bewirken, und der zweite Verbinder (28) des Systems mit dem zweiten Anschluss (30) in Eingriff gebracht werden kann, um eine Verbindung mit dem zusätzlichen Kabel (20) herzustellen und über die Kupplung (38) mit dem ersten Verbinder (28) eine Kurzschlussverbindung zwischen dem zusätzlichen Kabel (20) und den kurzgeschlossenen Kabeln der Gruppe (22) zu bewirken.

10. Leitung nach Anspruch 9, wobei das zusätzliche Kabel (20) eines aus einer zweiten Gruppe von Heizkabeln (22) ist, die mit Strom versorgt werden, um jeweilige Phasen eines mehrphasigen Wechselstroms zu führen, und mit dem zweiten externen Anschluss (30) verbunden sind.

11. Unterwasserinstallation, die mindestens eine Leitung (10) nach Anspruch 9 oder 10 umfasst.

12. Verfahren zur Behebung eines Fehlers (36) in einem Heizkabel (20), das zu einer Gruppe von Heizkabeln (22) gehört, die durch jeweilige Phasen eines mehrphasigen Wechselstroms mit Strom versorgt werden, um einen Heizkreis einer elektrisch beheizten Unterwasserleitung (10) zu definieren, wobei das Verfahren Folgendes beinhaltet:
Trennen einer Sternschaltung von der Leitung (10), wobei diese Schaltung die Kabel der Gruppe (22) in einem Kurzschluss verbindet; und
Verbinden einer Abhilfesternschaltung mit der Leitung (10) durch:
Verbinden eines ersten Verbinders (28) der Abhilfesternschaltung mit mindestens zwei Kontakten (32) eines ersten Anschlusses (30), wobei diese Kontakte (34) mit jeweiligen intakten Kabeln (20) der Gruppe (22) verbunden sind, um diese intakten Kabel (20) kurzzuschließen, wobei die Kabel (20) der Gruppe (22) alle mit jeweiligen Kontakten (32) des ersten Anschlusses (30) verbunden sind, und
Verbinden eines mit dem ersten Verbinder (28) gekoppelten zweiten Verbinders (28) der Abhilfesternschaltung mit einem zweiten Anschluss (30), von dem mindestens ein Kontakt (32) mit einem jeweiligen zusätzlichen intakten Heizkabel (20) der Leitung (10) verbunden ist, die von einer Phase eines Wechselstroms gespeist wird, wodurch dieses zusätzliche Kabel (20) mit den intakten Kabeln (20) der Gruppe (22) kurzgeschlossen wird, um einen neuen Heizkreis zu bilden.

13. Verfahren nach Anspruch 12, das das Verbinden des ersten und zweiten Verbinders (28) mit jeweiligen Anschlüssen (30) beinhaltet, die außerhalb der Leitung (10) positioniert sind, wobei diese Anschlüsse (30) jeweils mit der Gruppe von Heizkabeln (22) und mit dem zusätzlichen Heizkabel (20) verbunden sind.

14. Verfahren nach Anspruch 12 oder 13, das das Auswählen des zusätzlichen Kabels (20) aus einer zweiten Gruppe von Heizkabeln (22) beinhaltet, die mit Strom versorgt werden, um jeweilige Phasen eines mehrphasigen Wechselstroms zu führen.

15. Verfahren nach einem der Ansprüche 12 bis 14, das ferner vorab Folgendes beinhaltet:
Identifizieren des Heizkabels (20) mit dem Fehler (36); und
Konfigurieren der Abhilfesternschaltung, um das Heizkabel (20) mit dem Fehler (36) zu isolieren.

16. Verfahren nach Anspruch 15, das ferner das Konfigurieren der Abhilfesternschaltung beinhaltet, um sie mit dem zusätzlichen Kabel (20) zu verbinden, das zum Kurzschließen mit den intakten Kabeln (20) der ersten Gruppe (22) ausgewählt wurde.

17. Verfahren nach Anspruch 15 oder 16, durchgeführt an einer Unterwasserleitung (10), wobei das Verfahren das Konfigurieren der Abhilfesternschaltung vor dem Absenken der konfigurierten Abhilfesternschaltung in das Wasser beinhaltet.

18. Verfahren nach einem der Ansprüche 15 bis 17, das das Konfigurieren der Abhilfesternschaltung durch Modifizieren von Verbindungen innerhalb des ersten und/oder zweiten Verbinders (28) beinhaltet.

19. Verfahren nach Anspruch 18, das das Bewegen oder Entfernen von Kontakten (34) von mindestens einem der Verbinder (28) beinhaltet.

20. Verfahren nach einem der Ansprüche 15 bis 19, das das Konfigurieren der Abhilfesternschaltung durch Modifizieren von Verbindungen innerhalb einer Anschlussdose (48) beinhaltet, mit der der erste und zweite Verbinder (28) gekoppelt sind.

21. Verfahren nach einem der Ansprüche 15 bis 20, das das Konfigurieren der Abhilfesternschaltung durch Modifizieren von Verbindungen innerhalb einer Kupplung (38) zwischen den Verbindern (28) beinhaltet.

22. Verfahren zum Beheben eines Fehlers (36) in einem Heizkabel (20), das zu einer Gruppe von Heizkabeln (22) gehört, die von jeweiligen Phasen eines mehrphasigen Wechselstroms gespeist werden, um einen Heizkreis einer elektrisch beheizten Unterwasserleitung (10) zu definieren, wobei das Verfahren Folgendes beinhaltet:
Identifizieren des fehlerhaften Kabels (20);
Konfigurieren einer Abhilfeschaltung zum Verbinden mit dem fehlerhaften Kabel (20) durch Konfigurieren von Kontakten (34) von Verbindern (28) der Abhilfeschaltung;
Ineingriffbringen eines ersten Verbinders (28) der konfigurierten Abhilfeschaltung mit einem ersten Anschluss (30) der Leitung (10), der unter Wasser an einer Längsposition auf einer Seite des Fehlers (36) zugänglich ist, wobei die Kabel (20) der Gruppe (22) alle mit jeweiligen Kontakten (32) des ersten Anschlusses (30) verbunden sind,
Ineingriffbringen eines zweiten Verbinders (28) der konfigurierten Abhilfeschaltung mit einem zweiten Anschluss (30) der Leitung (10), der unter Wasser an einer anderen Längsposition auf einer gegenüberliegenden Seite des Fehlers (36) zugänglich ist, wobei die Kabel (20) der Gruppe (22) alle auch mit jeweiligen Kontakten (32) des zweiten Anschlusses (30) verbunden sind, und
Wiederherstellen des Heizkreises durch Leiten einer Phase des Wechselstroms entlang des fehlerhaften Kabels (20) und entlang einer Bypass-Kupplung (38) zwischen dem ersten und zweiten Verbinder (28), ohne auch mindestens eine andere Phase des Wechselstroms entlang der Bypass-Kupplung (38) zu leiten.

## Revendications

1. Système de connexion en étoile correctrice pour un conduit sous-marin chauffé électriquement (10), le système comprenant :
des première et seconde bornes (30) ;
des premier et second connecteurs (28) qui sont chacun complémentaires d'une borne respective parmi les bornes (30), le premier connecteur (28) comprenant au moins deux contacts (34) conçus pour être raccordés à au moins deux contacts (32) de la première borne (30) et le second connecteur (28) comprenant au moins un contact (34) conçu pour être raccordé à au moins un contact (32) de la seconde borne (30) ; et
un élément de couplage (38) entre les premier et second connecteurs (28) ;
**caractérisé en ce que** les bornes (30) sont exposées de façon à être accessibles aux connecteurs (28) respectifs sous l'eau afin de produire un raccordement en court-circuit par le biais de l'élément de couplage (38) entre les au moins deux contacts (34) du premier connecteur (28) et l'au moins un contact (34) du second connecteur (28).

2. Système selon la revendication 1, propre à être configuré en modifiant des connexions au sein du premier et/ou du second connecteur (28).

3. Système selon la revendication 2, dans lequel lesdits contacts (34) d'au moins un desdits connecteurs (28) sont déplaçables ou amovibles de manière à servir de connexions modifiables.

4. Système selon l'une quelconque des revendications précédentes, comprenant, en outre, une boîte de jonction (48) à laquelle les premier et second connecteurs (28) sont couplés.

5. Système selon la revendication 4, propre à être configuré en modifiant des connexions au sein de la boîte de jonction (48).

6. Système selon la revendication 5, dans lequel les connexions modifiables comprennent des conducteurs déplaçables ou amovibles (38) de la boîte de jonction (48).

7. Système selon l'une quelconque des revendications précédentes, propre à être configuré en modifiant des connexions au sein de l'élément de couplage (38).

8. Système selon l'une quelconque des revendications précédentes, dans lequel les premier et second connecteurs (28) sont accouplables en conditions humides.

9. Conduit chauffé électriquement (10), comprenant :
au moins un groupe de câbles chauffants (22) qui sont alimentés pour transporter des phases respectives de courant alternatif polyphasé et sont raccordés à une première borne externe (30) ;
au moins un câble chauffant supplémentaire (20) qui est alimenté pour transporter une phase de courant alternatif et est raccordé à une seconde borne externe (30) ; et
un système de connexion en étoile correctrice selon l'une quelconque des revendications précédentes, le premier connecteur (28) du système étant propre à être mis en prise avec la première borne (30) pour être raccordé à, et pour produire un raccordement en court-circuit entre, au moins deux des câbles (20) du groupe (22), et le second connecteur (28) du système étant propre à être mis en prise avec la seconde borne (30) pour être raccordé au câble supplémentaire (20) et, par le biais de l'élément de couplage (38), au premier connecteur (28), pour produire un raccordement en court-circuit entre le câble supplémentaire (20) et les câbles court-circuités du groupe (22).

10. Conduit selon la revendication 9, dans lequel le câble supplémentaire (20) fait partie d'un second groupe de câbles chauffants (22) qui sont alimentés pour transporter des phases respectives de courant alternatif polyphasé et sont raccordés à la seconde borne externe (30).

11. Installation sous-marine comprenant au moins un conduit (10) selon la revendication 9 ou la revendication 10.

12. Procédé de correction d'une défaillance (36) dans un câble chauffant (20), faisant partie d'un groupe de câbles chauffants (22) alimentés par des phases respectives de courant alternatif polyphasé pour définir un circuit de chauffage d'un conduit sous-marin chauffé électriquement (10), le procédé comprenant :
détacher du conduit (10) une connexion en étoile, cette connexion reliant les câbles du groupe (22) en court-circuit ; et
raccorder au conduit (10) une connexion en étoile correctrice en :
raccordant un premier connecteur (28) de la connexion en étoile correctrice à au moins deux contacts (32) d'une première borne (30), ces contacts (34) étant raccordés à des câbles intacts (20) respectifs du groupe (22), afin de relier ces câbles intacts (20) en court-circuit, les câbles (20) du groupe (22) étant tous raccordés à des contacts (32) respectifs de la première borne (30) ; et
raccordant un second connecteur (28) de la connexion en étoile correctrice, couplé au premier connecteur (28), à une seconde borne (30) comportant au moins un contact (32) raccordé à un câble chauffant intact supplémentaire (20) respectif du conduit (10) alimenté par une phase de courant alternatif, de façon à raccorder ce câble supplémentaire (20) en court-circuit aux câbles intacts (20) du groupe (22) afin de former un nouveau circuit de chauffage.

13. Procédé selon la revendication 12, comprenant le fait de raccorder les premier et second connecteurs (28) à des bornes (30) respectives situées à l'extérieur du conduit (10), ces bornes (30) étant respectivement raccordées au groupe de câbles chauffants (22) et au câble chauffant supplémentaire (20).

14. Procédé selon la revendication 12 ou la revendication 13, comprenant le fait de choisir le câble supplémentaire (20) dans un second groupe de câbles chauffants (22) qui sont alimentés pour transporter des phases respectives de courant alternatif polyphasé.

15. Procédé selon l'une quelconque des revendications 12 à 14, comprenant, en outre, préalablement :
identifier le câble chauffant (20) présentant la défaillance (36) ; et
configurer la connexion en étoile correctrice de façon à isoler le câble chauffant (20) présentant la défaillance (36).

16. Procédé selon la revendication 15, comprenant, en outre, le fait de configurer la connexion en étoile correctrice pour la raccorder au câble supplémentaire (20) choisi pour être raccordé en court-circuit aux câbles intacts (20) du premier groupe (22).

17. Procédé selon la revendication 15 ou la revendication 16, lorsqu'il est exécuté sur un conduit (10) sous l'eau, le procédé comprenant le fait de configurer la connexion en étoile correctrice avant d'abaisser la connexion en étoile correctrice configurée dans l'eau.

18. Procédé selon l'une quelconque des revendications 15 à 17, comprenant le fait de configurer la connexion en étoile correctrice en modifiant des connexions au sein du premier et/ou du second connecteur (28).

19. Procédé selon la revendication 18, comprenant le fait de déplacer ou d'enlever des contacts (34) d'au moins un desdits connecteurs (28).

20. Procédé selon l'une quelconque des revendications 15 à 19, comprenant le fait de configurer la connexion en étoile correctrice en modifiant des connexions au sein d'une boîte de jonction (48) à laquelle les premier et second connecteurs (28) sont couplés.

21. Procédé selon l'une quelconque des revendications 15 à 20, comprenant le fait de configurer la connexion en étoile correctrice en modifiant des connexions au sein d'un élément de couplage (38) entre les connecteurs (28).

22. Procédé de correction d'une défaillance (36) dans un câble chauffant (20), faisant partie d'un groupe de câbles chauffants (22) alimentés par des phases respectives de courant alternatif polyphasé pour définir un circuit de chauffage d'un conduit sous-marin chauffé électriquement (10), le procédé comprenant :
identifier le câble défaillant (20) ;
configurer une connexion correctrice pour la raccorder au câble défaillant (20) en configurant des contacts (34) de connecteurs (28) de la connexion correctrice ;
mettre un premier connecteur (28) de la connexion correctrice configurée en prise avec une première borne (30) du conduit (10) qui est accessible sous l'eau à un emplacement longitudinal sur un côté de la défaillance (36), les câbles (20) du groupe (22) étant tous raccordés à des contacts (32) respectifs de la première borne (30) ;
mettre un second connecteur (28) de la connexion correctrice configurée en prise avec une seconde borne (30) du conduit (10) qui est accessible sous l'eau à un autre emplacement longitudinal sur un côté opposé de la défaillance (36), les câbles (20) du groupe (22) étant également tous raccordés à des contacts (32) respectifs de la seconde borne (30) ; et
rétablir le circuit de chauffage en transmettant une phase du courant alternatif le long du câble défaillant (20) et le long d'un élément de couplage de dérivation (38) entre les premier et second connecteurs (28), sans transmettre également au moins une autre phase du courant alternatif le long de l'élément de couplage de dérivation (38).
